(19) Europäisches Patentamt
European Patent Office
Office européen des brevets

(11) EP 4 144 969 A1

(12) **EUROPEAN PATENT APPLICATION**

(43) Date of publication:
08.03.2023 Bulletin 2023/10

(51) International Patent Classification (IPC):
*F02B 53/00* (2006.01)    *F01C 1/07* (2006.01)

(21) Application number: 21000221.8

(52) Cooperative Patent Classification (CPC):
F02B 53/00; F01C 1/07

(22) Date of filing: 09.08.2021

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: **Przemyslaw, Plucinski**
**62-200 Osiniec (PL)**

(72) Inventor: **Przemyslaw, Plucinski**
**62-200 Osiniec (PL)**

(54) **DESCRIPTION OF THE COMBUSTION PLANETARY ENGINE**

(57)    Combustion planetary engine equipped in a ring-shaped cylinder, sparkplugs, inlet, exhaust and pistons with their bottoms aimed at each other, forming the combustion chamber, with sealing elements working with the cylinder face, whose characteristic feature is that the pistons (1) are attached to at least two levers (2) at the end of the rods, while the other end of the levers (2) is rotationally attached to the main shaft (3), the levers (2) have valves (4) closing the work chamber (5) attached to them where the levers (2) go through the cylinder (6), and on the levers (2) slider-crank linkages (7) are connected in a movable manner with toothed planetary gears (8), working with an immovable toothed ring wheel (9) and a central toothed wheel (10), thus forming at least one planetary gear train; planetary gears (8) are connected in a movable manner with pivots (11) through slider mechanisms (19) in turn connected with the case (12), stiffly connected with the main shaft (3).

The combustion planetary engine can be applied in all the devices using the traditional common combustion engine.

Fig. 1

**Description**

The invention is the combustion planetary engine. It can be applied in all the devices using the traditional common combustion engine.

The piston and crank engine was constructed and patented by Nicolaus August Otto (patent DRP no 532, 1876). The basic principle is the conversion of energy of burning fuel agent into mechanical energy. This process results in creating pressure, which is then transformed into the reciprocating motion of a piston, which, though a crank mechanism, is converted into the rotary motion of the crank shaft Such engine construction has one significant limitation: all the thermodynamic processes inside the engine take place with constant pitch volume of the work chamber *Vs:*

$$Vs = constans$$

Every volume of the work chamber in piston and crank engine are defined at the design stage and cannot be altered: combustion chamber volume Vk, total volume Vc:

$$Vk = constans$$

$$Vc = constans$$

Total volume *Vc* is the sum of the combustion chamber volume *Vk* and cylinder capacity *Vs*:

$$Vc = Vk + Vs$$

The ratio of total volume to the combustion chamber volume describes the compression rate $\varepsilon_s$:

$$\varepsilon_s = \frac{V_c}{V_k}$$

Compression rate $\varepsilon_s$ is a significant parameter influencing the efficiency of the engine - as $\varepsilon_s$ grows, the efficiency of the engine grows. It is accepted that the increase of $\varepsilon_s$ from 8 to 16 improves engine efficiency by 10%. Currently produced engines have the compression rate $\varepsilon_s$ between 8 and 10. This limitation is the result of knock combustion, which disappears with the increase of the rotary speed of an engine, however the construction of piston and crank engine with its constant combustion chamber volume *Vk* makes it impossible to increase the compression rate $\varepsilon_s$ after the increase of the rotary speed of an engine and the disappearance of knock combustion.

Another limitation preventing the increase of the piston and crank engine efficiency is the limited regulation of the expansion rate $\varepsilon_r$, resulting from its construction. With this solution a part of the volume of the burning fuel agent is not converted into the mechanical energy, but is removed into the exhaust system. It is commonly accepted that the losses in piston and crank engine are around 30% of the engine efficiency.

The aim of this invention is presenting an engine with a construction free of the abovementioned limitations. This goal has been achieved by constructing a combustion planetary engine, which allows for a change in the combustion chamber where thermodynamic processes during operation occur.

Combustion planetary engine, as presented in this invention, contains a ring-shaped cylinder, sparkplugs, inlet, outlet and pistons with their bottoms aimed at each other, forming the combustion chamber, with sealing elements working with cylinder face, whose characteristic feature is that the pistons are attached to at least two levers at the end of the rods, while the other end of the levers is rotationally attached to the main shaft. The levers have valves closing the work chamber attached to them where the levers go through the cylinder, and on the levers slider-crank linkages are connected in a movable manner with planetary gears, working with an immovable toothed ring wheel and a central toothed wheel, thus forming at least one planetary gear train. Planetary gears are connected in a movable manner with pivots through slider mechanisms in turn connected with the case, stiffly connected with the main shaft. Planetary gears make two rotations around their own axis during one rotation of the main shaft. The change of the angle of planetary gears in relation to the axis of rotation of the main shaft results in the change in volume of the work chamber, in which thermodynamic changes occur.

The solution presented in the invention, due to the possible change in volume of the work chamber, in which thermodynamic changes occur during the engine operation, allows for the increase of the engine efficiency and lowering of the losses.

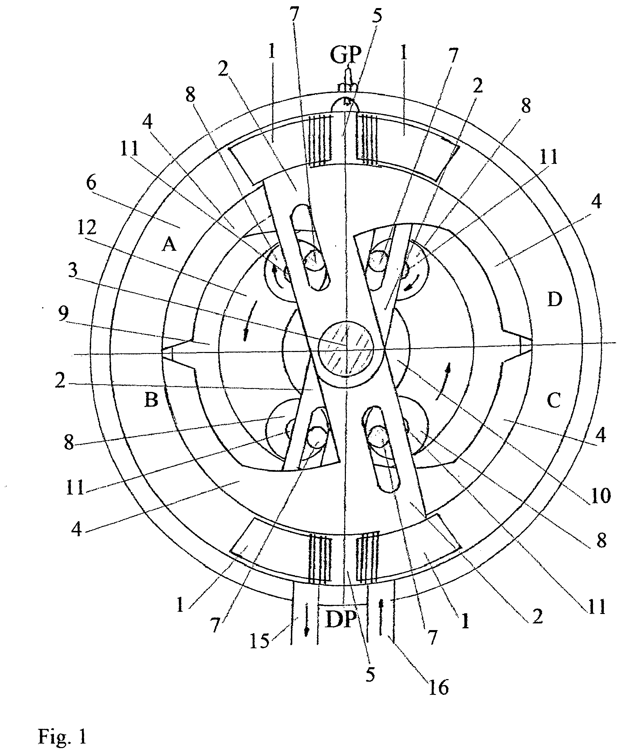

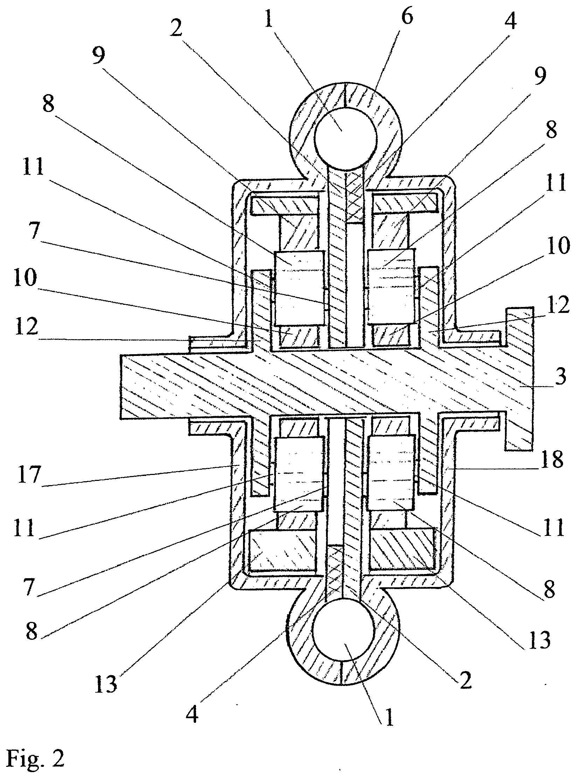

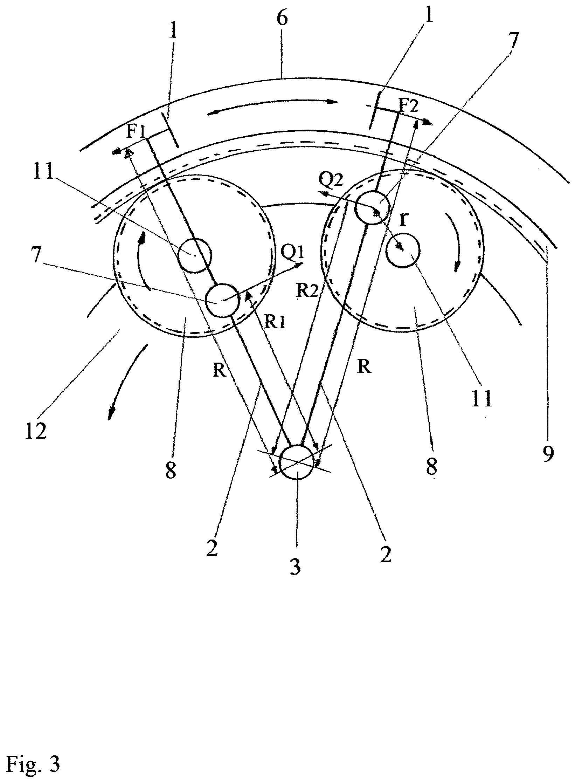

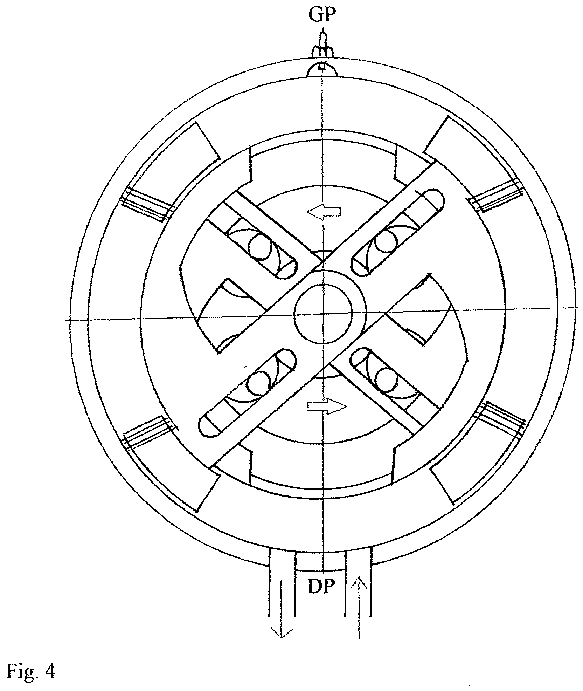

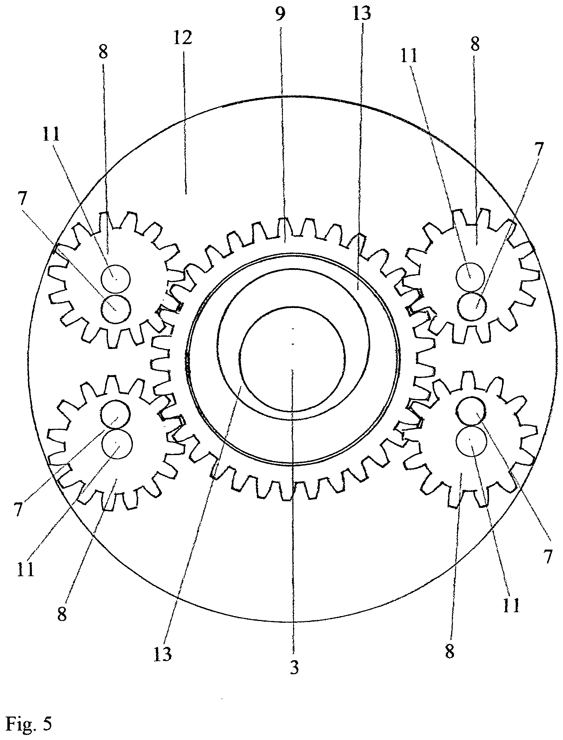

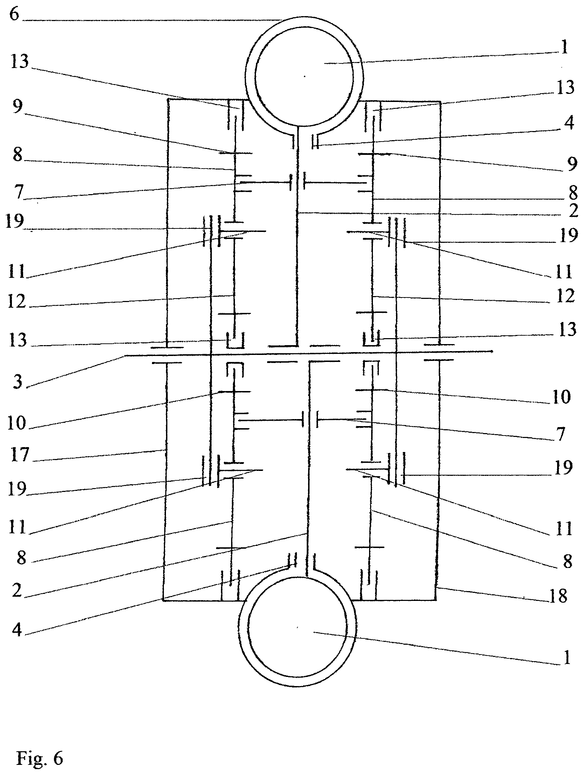

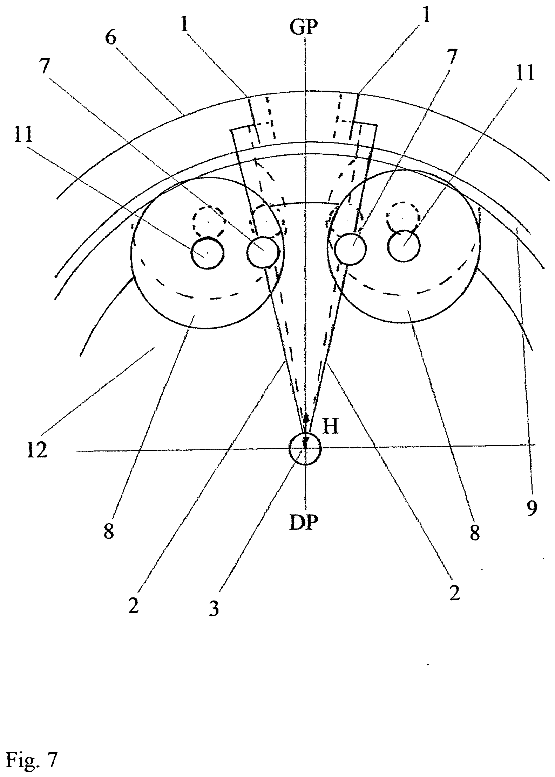

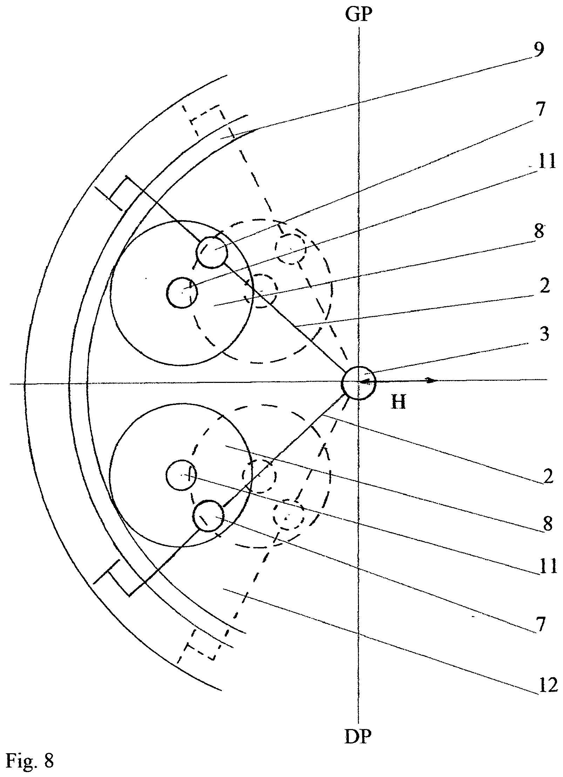

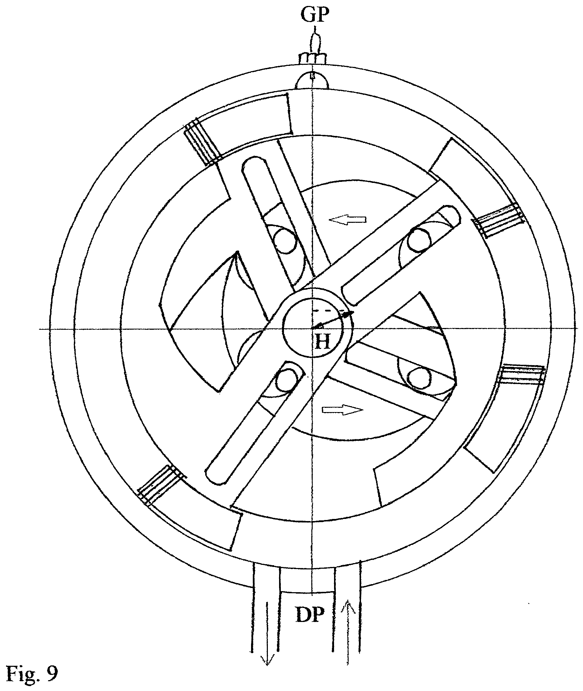

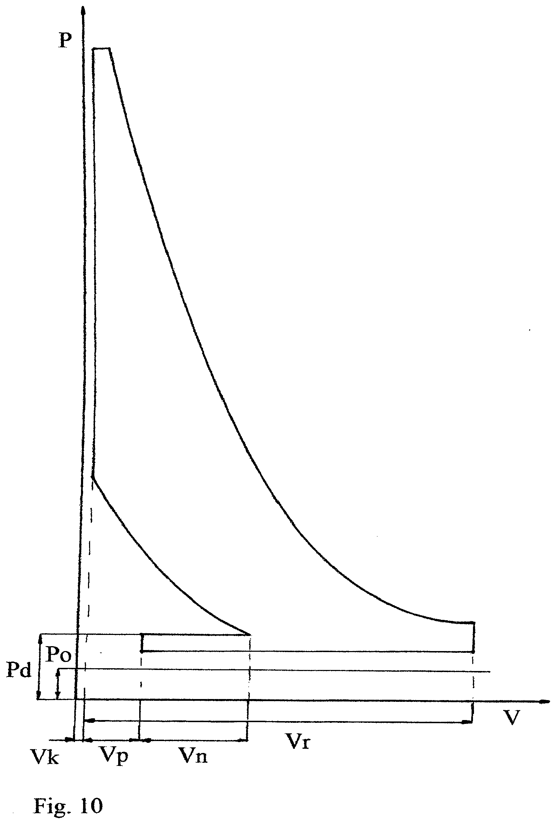

The example of the invention is presented in drawings, where Fig. 1 presents the longitudinal section of the engine during ignition and exhaust phases, Fig. 2 presents the cross-section, Fig. 3 presents the principle of operation of the slider-crank mechanism connected to the planetary toothed wheel, Fig. 4 presents an engine schematic where the pistons on the left have completed the decompression stroke, and the pistons on the right have completed the intake stroke, Fig. 5 presents an eccentric mechanism regulating the settings of planetary gears in relation to the main shaft, Fig. 6 presents a kinematic drawing of a schematic of the combustion planetary engine cross-section, Fig. 7 presents a schematic of the change of the combustion chamber volume $Vk$, Fig. 8 presents a schematic of the volume change of the exhaust chamber $Vr$, Fig. 9 presents an engine schematic for the shift in the axis of planetary gears by the resultant value H, Fig. 10 presents a comparative graph of the combustion planetary engine cycle.

Combustion planetary engine presented here contains front 17 and rear 18 casing, connected with a ring-shaped cylinder 6 with a sparkplug 14, inlet 16 and exhaust 15. Cylinder 6 contains pistons 1 with sealing elements working with the cylinder face 6. The pistons 1 are attached to levers 2 at the end of the rods. The levers 2 have valves 4 with sealing elements closing the work chamber 5 attached to them where the levers 2 go through the cylinder 6. The levers are rotationally attached to the main shaft 3. The levers 2 are connected with planetary gears 8 through slider-crank linkages 7, this forming a crank mechanism. Planetary gears 8 are connected in a movable manner with pivots 11 through slider mechanisms 19 in turn connected with the case 12, stiffly connected with the main shaft 3. Planetary gears 8, working with an immovable toothed ring wheel 9 and a central toothed wheel 10 form a planetary gear train. The central toothed wheel 10 and the toothed ring wheel 9 are placed on two eccentric mechanisms 13, whose goal is to shift the planetary gear train in relation to the main shaft 3.

The crank mechanism consists of levers 2, slider-crank mechanisms 7 connected to the planetary gears 8, working with the immovable toothed ring wheel 9 and the case 12, on which the planetary gears 8 are mounted. Forces $F_1$ and $F_2$ are exerted at the ends of the levers 2, where the pistons 1 are attached. The $F_1$ force works on the left lever 2, and $F_2$ works on the right lever 2. Forces $F_1$ and $F_2$ have the same value and direction, but a different sense. Levers 2 have the same length R. the distance r of the slider mechanism 7 from the centre of the planetary gear 8 is the same for both the right and left gear 8. The left lever 2 remains in equilibrium if:

$$F_1 \cdot R = Q_1 \cdot R_1$$

$$Q_1 = \frac{F_1.R}{R_1}$$

The left lever 2 remains in equilibrium if:

$$F_2 \cdot R = Q_2 \cdot R_2$$

$$Q_2 = \frac{F_2.R}{R_2}$$

As $R_1$ is shorter than $R_2$,

$$R_1 < R_2$$

the forces in equilibrium are in relation $Q_1 > Q_2$. If $F_1 > Q_1$, the planetary gear 8 shall turn clockwise, and working together with the immovable toothed ring wheel 9, it shall force the rotary counter clockwise motion of the case 12, stiffly connected with the main shaft 3.

Forces $F_1$ and $F_2$ occur as a result of burning fuel, which in turn results in the increase in temperature, and the following increase in pressure. The pressure moving evenly in all directions exerts a force on the pistons 1, attached to the levers 2. The levers 2, through slider-crank linkages 7 connected with planetary gears 8, convert the reciprocating motion of pistons 1 into the rotary motion of the planetary gears 8. The planetary gears 8, in cooperation with the immovable toothed ring wheel 9, force the movement of the case 12, with which the planetary gears 8 cooperate. The case is stiffly connected with the main shaft 3, which starts turning.

Combustion planetary engine contains two pairs of pistons 1 placed in the cylinder 6 opposite each other. One pair of pistons 1 in the point GP forms work chamber 5, working at that point as a combustion chamber *Vk,* the other pair of pistons 1 in the point *DP* forms work chamber 5, working at that point as an exhaust chamber *Vp.* If we divide the cylinder 6 in half by a line going through the sparkplug 14 is mounted, thorough the middle of the main shaft 3 and the middle of the exhaust chamber *Vp,* and a line perpendicular to it, going through the middle of the main shaft 3, then the cylinder 6 shall be divided into four equal parts. A different thermodynamic reaction will be taking place in each quarter.

Thus:

A top left quarter - power stroke

B bottom left quarter - exhaust stroke

C bottom right quarter - intake stroke

D top right quarter - compression stroke

An even placement of planetary gears 8 in relation to the centre of the main shaft 3 ensures an equal volume of the forming work chambers, therefore the combustion chamber volume *Vk* is equal to the exhaust chamber volume *Vp*

$$Vk = Vp$$

If the planetary gears 8 rotate by 180° axially, the pistons 1 will change their position in relation to the cylinder 6 by 90°. The pistons 1 that were previously in top GP point, have moved further from each other in an intake stroke. Therefore the volume of the chamber in which the power stroke takes place *Vr* is equal to the volume of an intake chamber *Vn:*

$$Vr = Vn$$

Another rotation of the planetary gears 8 by 180° axially results in the change of the position of the pistons 1 in relation to the cylinder 6 by 90°. The pistons 1 on the left have moved closer to each other, performing an exhaust stroke. The pistons 1 on the right have moved closer, performing the compression stroke, the volume of the chamber in which the exhaust stroke takes place Vw is equal to the volume of a compression chamber Vs

$$Vw = Vs$$

The volumes of the chambers where the thermodynamic processes occurred are the same:

$$Vr = Vn = Vw = Vs$$

This marks all the thermodynamic processes in the engine, and they will be repeated with the constant volume of the work chambers.

The function of eccentric mechanisms 13 working with the central toothed wheel 10 and the toothed ring wheel 9 is to change the angle of the centre of the orbit, along which the planetary gears 8 move in relation to the main shaft 3. If the eccentric mechanisms 13 are placed so that the centre of the orbit of planetary gears 8 rotation is on the *GP-DP* line, shifted by the H value measured from the centre of the main shaft 3 in the direction of the GP point, the combustion chamber volume *Vk* is decreased, while the exhaust chamber volume *Vp* is increased:

$$Vk < Vp$$

The decrease in combustion chamber volume $Vk$ will cause the change of the compression rate $\varepsilon_s$ according to the formula:

$$\varepsilon_s = \frac{V_s + V_k}{V_k}$$

If the eccentric mechanisms 13 are placed so that the centre of the orbit of planetary gears 8 rotation is on the line perpendicular to the *GP-DP* line going through the centre of the main shaft 3, shifted by the H value measured right from the centre of the main shaft 3, the expansion chamber volume $Vr$ is increased, while the intake chamber volume $Vn$ is decreased:

$$Vr > Vn$$

The increase in the expansion chamber volume $Vr$ will cause the change of the expansion rate $\varepsilon_s$ according to the formula:

$$\varepsilon_r = \frac{V_r + V_k}{V_k}$$

Placing the eccentric mechanisms 13 so that the centre of the orbit of planetary gears 8 rotation is the resultant of the shift by the value of *H* in the direction of the *GP* point and the shift to the right in relation to the *GP-DP* line measured from the centre of the main shaft 3, will result in the increase in the compression rate $\varepsilon_s$, and the increase in the expansion rate $\varepsilon_r$.

A comparative cycle diagram has been made to illustrate the thermal calculations for the combustion planetary engine, with the positioning of the planetary gears 8 orbit rotation axis shifted by the resultant value H, in relation to the main shaft 3. Symbols used on the diagram:

*P* - pressure
*V*- volume
*Pd* - charging pressure
*Po* - surrounding pressure
*Vk* - combustion chamber volume
*Vp* - exhaust chamber volume
*Vn* - intake chamber volume
*Vr* - expansion chamber volume.

Comparing the diagram for the combustion planetary engine cycle with a diagram of a piston and crank engine cycle shows that the change of the compression rate $\varepsilon_s$ and the change of the expansion rate $\varepsilon_s$ in the combustion planetary engine as presented here influences the efficiency of the engine, i.e. increases its efficiency and reduces losses.

**Claims**

1. Combustion planetary engine equipped in a ring-shaped cylinder, sparkplugs, inlet, exhaust and pistons with their bottoms aimed at each other, forming the combustion chamber, with sealing elements working with the cylinder face, whose characteristic feature is that the pistons (1) are attached to at least two levers (2) at the end of the rods, while the other end of the levers (2) is rotationally attached to the main shaft (3), the levers (2) have valves (4) closing the work chamber (5) attached to them where the levers (2) go through the cylinder (6), and on the levers (2) slider-crank linkages (7) are connected in a movable manner with toothed planetary gears (8), working with an immovable toothed ring wheel (9) and a central toothed wheel (10), thus forming at least one planetary gear train; planetary gears (8) are connected in a movable manner with pivots (11) through slider mechanisms (19) in turn connected with the case (12), stiffly connected with the main shaft (3).

2. Combustion planetary engine in accordance with point 1 of the claims, whose characteristic feature is that planetary gears (8) make two rotations around their own axis during one rotation of the main shaft (3).

3. Combustion planetary engine in accordance with point 1 of the claims, whose characteristic feature is that the change of the angle of planetary gears (8) in relation to the axis of rotation of the main shaft (3) results in the change in volume of the work chamber (5), in which thermodynamic changes occur.

...

Fig. 1

Fig. 2

Fig. 3

Fig. 4

Fig. 5

Fig. 6

Fig. 7

GP

9

7

11

8

2

3

H

2

8

11

7

12

DP

Fig. 8

GP

H

DP

Fig. 9

Fig. 10

Europäisches
Patentamt

European
Patent Office

Office européen
des brevets

# EUROPEAN SEARCH REPORT

Application Number

EP 21 00 0221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2 155 249 A (CHARLES BANCROFT) 18 April 1939 (1939-04-18) * the whole document * | 1-3 | INV. F02B53/00 F01C1/07 |
| A | US 3 500 798 A (ARNAL GEORGE CHARLES) 17 March 1970 (1970-03-17) * the whole document * | 1-3 | |
| A | US 2018/087454 A1 (CUNNINGHAM STEPHEN L [US] ET AL) 29 March 2018 (2018-03-29) * the whole document * | 1-3 | |
| A | US 3 829 257 A (GOERING D) 13 August 1974 (1974-08-13) * the whole document * | 1-3 | |
| A | US 5 537 973 A (WITTRY DAVID B [US]) 23 July 1996 (1996-07-23) * the whole document * | 1-3 | |
| A | US 2010/251991 A1 (DRACHKO YEVGENIY FEDOROVICH [UA]) 7 October 2010 (2010-10-07) * the whole document * | 1-3 | TECHNICAL FIELDS SEARCHED (IPC) F02B F01C |
| A | WO 95/34750 A1 (SCHNETZER ROBERT [AT]) 21 December 1995 (1995-12-21) * the whole document * | 1-3 | |
| A | US 5 527 165 A (SCHADECK MATHEW A [US]) 18 June 1996 (1996-06-18) * the whole document * | 1-3 | |

The present search report has been drawn up for all claims

| Place of search | Date of completion of the search | Examiner |
|---|---|---|
| Munich | 31 January 2023 | Paulson, Bo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 00 0221

31-01-2023

| Patent document cited in search report | | Publication date | Patent family member(s) | | Publication date |
|---|---|---|---|---|---|
| US 2155249 | A | 18-04-1939 | NONE | | |
| US 3500798 | A | 17-03-1970 | NONE | | |
| US 2018087454 | A1 | 29-03-2018 | CA | 2794500 A1 | 13-10-2011 |
| | | | CN | 102906393 A | 30-01-2013 |
| | | | EP | 2553241 A2 | 06-02-2013 |
| | | | US | 2011239981 A1 | 06-10-2011 |
| | | | US | 2015128896 A1 | 14-05-2015 |
| | | | US | 2018087454 A1 | 29-03-2018 |
| | | | WO | 2011126835 A2 | 13-10-2011 |
| US 3829257 | A | 13-08-1974 | NONE | | |
| US 5537973 | A | 23-07-1996 | NONE | | |
| US 2010251991 | A1 | 07-10-2010 | EP | 2233691 A1 | 29-09-2010 |
| | | | RU | 2439333 C1 | 10-01-2012 |
| | | | UA | 87229 C2 | 25-06-2009 |
| | | | US | 2010251991 A1 | 07-10-2010 |
| | | | WO | 2009072994 A1 | 11-06-2009 |
| WO 9534750 | A1 | 21-12-1995 | AU | 2565295 A | 05-01-1996 |
| | | | WO | 9534749 A1 | 21-12-1995 |
| | | | WO | 9534750 A1 | 21-12-1995 |
| US 5527165 | A | 18-06-1996 | AR | 247773 A1 | 31-03-1995 |
| | | | AU | 1354192 A | 07-09-1992 |
| | | | CA | 2101319 A1 | 09-08-1992 |
| | | | CN | 1064914 A | 30-09-1992 |
| | | | EP | 0570482 A1 | 24-11-1993 |
| | | | IE | 920425 A1 | 12-08-1992 |
| | | | IL | 100868 A | 16-10-1996 |
| | | | JP | H06508667 A | 29-09-1994 |
| | | | NZ | 241513 A | 27-09-1994 |
| | | | US | 5147191 A | 15-09-1992 |
| | | | US | 5527165 A | 18-06-1996 |
| | | | WO | 9214036 A1 | 20-08-1992 |
| | | | YU | 12492 A | 04-12-1995 |
| | | | ZA | 92869 B | 27-01-1993 |

EPO FORM P0459